Europäisches Patentamt

European Patent Office

Office européen des brevets

(19)

(11) Publication number : **0 289 253 B1**

(12) **EUROPEAN PATENT SPECIFICATION**

(45) Date of publication of patent specification :
29.03.95 Bulletin 95/13

(51) Int. CI.⁶ : **H04L 12/12**

(21) Application number : 88303720.2

(22) Date of filing : 25.04.88

(54) **System and method for controlling terminal equipment.**

(30) Priority : 25.04.87 JP 102763/87

(43) Date of publication of application :
02.11.88 Bulletin 88/44

(45) Publication of the grant of the patent :
29.03.95 Bulletin 95/13

(84) Designated Contracting States :
DE GB

(56) References cited :
US-A- 3 511 923
PATENT ABSTRACTS OF JAPAN, vol. 8, no. 49
(E-230)[1486], 6th March 1984; & JP-A-58 201
450 (MITSUBISHI DENKI K.K.) 24-11-1983
FUNKSCHAU, vol. 12, 1980, pages 101-102,
Munich, DE; "Telefonklingel-Fernschalter"

(73) Proprietor : **SHARP KABUSHIKI KAISHA**
**22-22 Nagaike-cho**
**Abeno-ku**
**Osaka 545 (JP)**

(72) Inventor : **Okuno, Yasuo**
**226-3, Toukujyou-cho**
**Nara-shi Nara-ken (JP)**

(74) Representative : **Brown, Kenneth Richard et al**
**R.G.C. Jenkins & Co.**
**26 Caxton Street**
**London SW1H 0RJ (GB)**

## Description

This invention relates to a system and a method for controlling the operational state of various types of terminal equipment as for instance described in EP-A-051 325. In particular, although not exclusively, the invention concerns a point-of-sales (hereinafter "POS") system using a local area network (LAN).

The POS system has been used in department stores and supermarkets to control their sales data. The POS system comprises a plurality of terminal equipment such as electronic cash registers installed in one or multiple shop fronts, connected to a master equipment that may be of the same form as the terminal equipment. When commodities are sold at a shop front, sales data such as the name, quantity and unit price of each commodity and total sum of money are input in a terminal equipment. The input data is directly sent to the master equipment where the data are aggregated and processed in real time.

In the conventional POS system, all the installed units of terminal equipment are turned ON or OFF simultaneously by an appropriate instruction data given by the master equipment. Alternatively an operator must turn ON or OFF each terminal equipment manually.

With the conventional terminal equipment control system, the operation of turning ON or OFF the terminal equipment is very complicated. Besides, even for terminal equipment which is not presently used, it may be necessary to deploy personnel to turn OFF the terminal equipment.

The object of the present invention is to solve the above problems by providing a terminal equipment control system of remarkably improved operability, capable of changing the operational state of terminal equipment connected to master equipment by remote control from the master equipment.

In one aspect the invention provides a system for individually controlling the operational state of a plurality of terminals in data communication with a master unit, the system comprising:

means for outputting a control signal from said master unit, said control signal being composed of a data time portion of preset duration which portion comprises a group of adjacent pulses, and a pause time portion having no such pulses;

means, provided in each said terminal, for measuring the duration of the data time portion of said control signal output from the master unit; and

means, provided in each said terminal, responsive to the measured duration of said data time portion, for outputting a signal to change the current operational state of the terminal when said measured duration becomes equal to or larger than a predetermined value set for the particular terminal;

said master unit setting the duration of the data time portion of said control signal according to the terminal whose operational state is to be changed.

In another aspect, the invention provides a method of individually controlling the operational state of a plurality of terminals in data communication with a master unit, the method comprising:

outputting a control signal from the master unit, said control signal being composed of a data time portion of preset duration which portion comprises a group of adjacent pulses, and a pause time portion having no such pulses;

measuring, at each terminal, the duration of the data time portion of said control signal output from the master unit; and

outputting, at each terminal, in response to the measured duration of said data time portion, a signal to change the current operational state of the terminal when said measured duration becomes equal to or larger than a predetermined value set for the particular terminal;

the duration of the data time portion of said control signal output by the master unit being set according to the terminal whose operational state is to be changed.

The present invention will become more fully understood from the detailed description given hereinbelow and the accompanying drawings which are given by way of illustration only, and thus are not limitative of the present invention, and wherein:

Fig. 1 is a block diagram showing the electrical connection of terminal equipment 1 relating to an embodiment of the present invention;

Fig. 2 is a block diagram showing the basic construction of the POS system;

Fig. 3 is a timing chart of the signal transmitted to the terminal equipment; and

Fig. 4 is a timing chart for explaining the operation of the control system of the present invention.

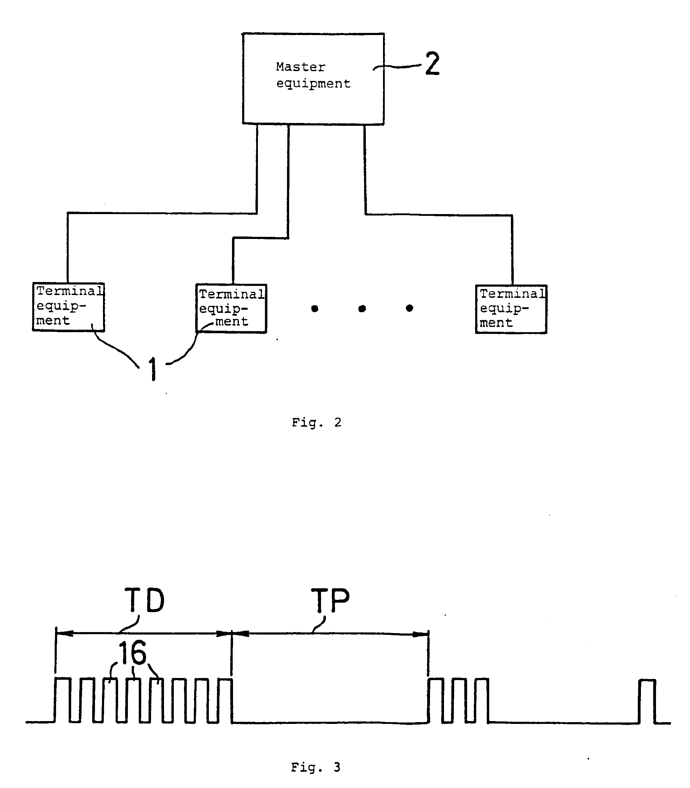

Fig. 2 is a block diagram schematically showing the construction of the POS system relating to an embodiment of the present invention. The POS system is widely employed by retail stores such as department stores and supermarkets. Referring to Fig. 2, the POS system comprises a plurality of units of terminal equipment 1 in the form of, say, electronic cash registers installed in a shop front, each connected to master equipment 2 of the same form as the terminal equipment or of another form installed, say, in a business control centre.

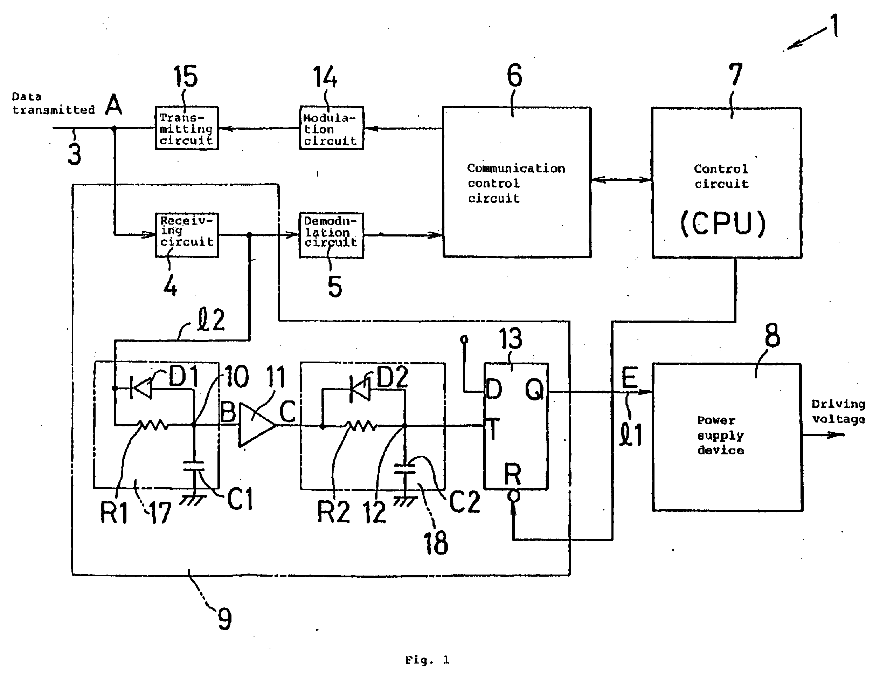

Fig. 1 is an electrical block diagram of the terminal equipment 1 employed in the POS system. Referring to Fig. 1, the terminal equipment 1 is connected through a data line 3 with the master equipment 2. The data line 3 is connected to a receiving circuit 4 which receives a signal sent via the data line 3. The output of the receiving circuit 4 is connected to a demodulation circuit 5 to obtain a data signal.

The data signal output from the demodulation circuit 5 is sent through a communication control circuit 6 to a control circuit 7 realised by, say a microprocessor which processes the data signal for storing in memory means and outputting to display means.

The terminal equipment 1 contains a power supply device 8 which reduces the supply voltage from a commercial AC power line to a specified voltage to drive the terminal equipment 1. The power supply device 8 is actuated or stopped by means of a control signal "E" sent via a line $\ell 1$ from a power control circuit 9.

The receiving circuit 4 is included in the power control circuit 9. The output of the receiving circuit 4 is connected via a branch line $\ell 2$ to a parallel circuit which comprises a resistor R1 and a diode D1 connected inversely. The other end of the parallel circuit is connected at a node 10 with an end of a capacitor C1 whose other end is grounded. A waveform shaping device 11 is connected to the node 10. The diode D1, the resistor R1 and the capacitor C1 constitute an integration circuit 17.

The output of the waveform shaping device 11 is connected to another integration circuit 18 which comprises a diode D2, a resistor R2 and a capacitor C2 which are connected to one another in the same manner as the diode D1, the resistor R1 and the capacitor C1. The integration circuits 17 and 18 constitute measuring means. A node 12 between the anode of the diode D2 and the capacitor C2 is connected to the clock input terminal "CK" of a flip flop circuit 13. The data input terminal "D" of the flip flop circuit 13 is connected with a power line, and the output terminal "Q" with the line $\ell 1$.

The control circuit 7 inputs a reset signal to the reset input terminal "R" of the flip flop circuit 13. To output data to the master equipment 2, the data is sent though the communication control circuit 6 to a modulation circuit 14 for modulation into an appropriate form and output through a transmitting circuit 15 to the data line 3.

Fig. 3 shows the signal waveform of data transmitted between the master equipment 2 and the terminal equipment 1 shown in Figs. 1 and 2. Referring to Fig. 3, a typical signal transmitted comprises a data time "TD" during which signal pulses 16 exist and a pause time "TP" during which no signal pulses 16 exist. The maximum time "Tmax" and the minimum time "Tmin" of the data time "TD" have been set in advance to satisfy the relation represented by the following expression:

$$Tmin \leqq TD \leqq Tmax$$

Specifically, the minimum time "Tmin" has been set to such a value as to allow the capacitor C1 of the integration circuit 17 of Fig. 1 to be charged completely in the duration of the signal pulses 16 of Fig. 3. The maximum time "Tmax" has been set to such a value as to allow the capacitor C2 of the integration circuit 18 of Fig. 1 to be charged completely when the signal pulses 16 are sent for the maximum time "Tmax" plus the pause time "TP" of Fig. 3. The pause time "TP" has been set to such a value as to allow the capacitors C1 and C2 of the integration circuits 17 and 18, respectively, to be discharged completely within the pause time "TP".

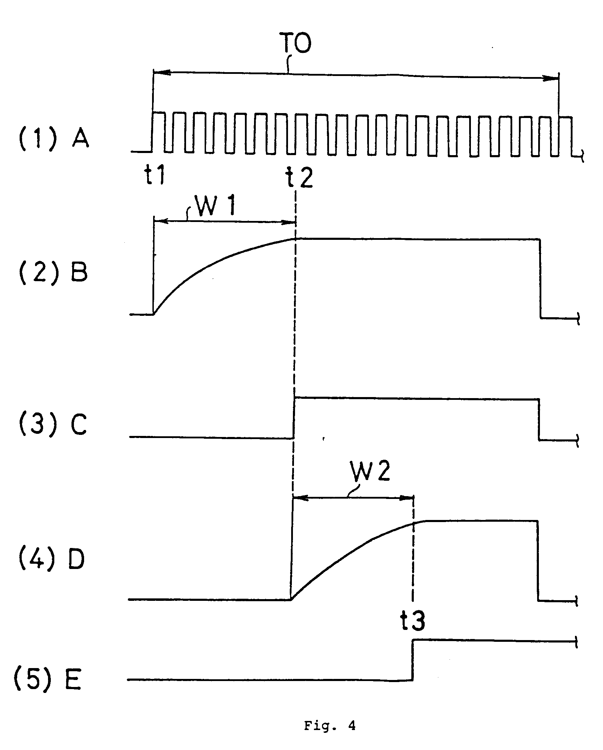

Fig. 4 is a timing chart for explaining the operation of the control system of the present embodiment for turning ON/OFF the terminal equipment 1. The operation of the control system is explained for the case where the desired terminal equipment 1 is turned ON/OFF by a signal sent from the master equipment 2. To turn ON the terminal equipment 1, a control data "A" shown in Fig. 4(1) is transmitted from the master equipment 2 to the data line 3. The duration "TO" of the control data "A" satisfies the following relation with the maximum time "Tmax" and the pause time "TP":

$$TO \geqq Tmax + TP$$

The control data "A" permits the capacitor C1 of the integration circuit 17 to be charged electrically so that the potential at the node 10 is output as a signal "B" from the integration circuit 17. The waveform of the signal "B" is shown in Fig. 4(2). The master equipment 2 starts sending the control signal "A" at a time "t1" of Fig. 4(1). The output "B" from the integration circuit 17 reaches a specified level at a time "t2" after a delay time W1 determined by the electrical constants for the resistor R1 and capacitor C1, respectively. Simultaneously, the output "C" of the waveform shaping device 11 rises from "L" level to "H" level, as shown in Fig. 4(3). The output "C" thus obtained after the time "t2" permits the integration circuit 18 to be charged electrically as indicated in Fig. 4(4). The output "D" of the integration circuit 18 reaches a specified level at a time "t3" after a delay time W2 determined by the electrical constants of the resistor R2 and capacitor C2, respectively.

When the output "D" of the integration circuit 18 reaches the specified level at the time "t3" as shown in Fig. 4(4), it is taken as a clock input into the flip flop circuit 13, whereby a control signal "E" form the output terminal "Q" of the flip flop circuit 13 changes to high level as shown in Fig. 4(5). As long as the control signal "E" is at high level, the power supply device 8 supplies power to the terminal equipment 1.

To turn OFF the terminal equipment 1, the master equipment 2 outputs an instruction data following a specified grammatical rule. When the control circuit 7 of the terminal equipment 1 reads the instruction, it outputs a signal to the reset input terminal "R" of the flip flop circuit 13, causing the flip flop circuit 13 to output the control signal "E" at low level. As a result, power from the power supply device 8 is shut off, thereby turning OFF the terminal equipment 1.

Here, the duration of the control data "A" of Fig.

4 (1) is longer than the maximum conceivable length of data to be transmitted, preventing the terminal equipment 1 once turned OFF from being turned ON erroneously by data transmitted thereafter by the master equipment 2.

According to the present invention, as mentioned above, the terminal equipment 1 is turned ON or OFF by means of such a circuit construction as represented by the power control circuit 9 of Fig. 1, which is remotely controlled with a control signal "A" from the master equipment 2. As a result, the operability of the POS system is remarkably improved, eliminating the waste of labour in turning ON or OFF the terminal equipment 1.

In the above embodiment of the present invention, the duration "TO" of the control data "A" shown in Fig. 4(1) is detected by the power control circuit 9. Alternatively, a counter or other appropriate means may be used in place of the power control circuit 9 as long as it is capable of detecting the duration of data transmitted through the data line 3.

According to the present invention, as understood from the above-described embodiment, the master equipment outputs a control signal of a specified duration to a terminal equipment. The duration of the control signal is measured by measuring means provided in the terminal equipment. When the measured result becomes equal to or longer than a preset value, the current operational state of the terminal equipment is changed.

Accordingly, the operational state of the terminal equipment can be changed without an instruction data following a specified grammatical rule, given from the master equipment. Therefore, the terminal equipment need not interpret the instruction for changing the state of the terminal equipment. Consequently, the circuit construction for changing the state of the terminal equipment can be made extremely simple, and the operation time is drastically shortened, as compared to the operation time in the case of a system requiring interpretation of instruction data.

## Claims

1. A system for individually controlling the operational state of a plurality of terminals (1) in data communication with a master unit (2), the system characterized by:

   means for outputting a control signal from said master unit, said control signal being composed of a data time portion of preset duration which portion comprises a group of adjacent pulses (16), and a pause time portion having no such pulses;

   means (17,18), provided in each said terminal, for measuring the duration of the data time portion of said control signal output from the master unit; and

   means (13), provided in each said terminal, responsive to the measured duration of said data time portion, for outputting a signal (E) to change the current operational state of the terminal when said measured duration becomes equal to or larger than a predetermined value set for the particular terminal;

   said master unit setting the duration of the data time portion of said control signal according to the terminal whose operational state is to be changed.

2. The control system of claim 1, wherein the measuring means comprises two integration circuits (17,18) connected in series.

3. The control system of claim 2, wherein the time constants of said integration circuits (17,18) determine said predetermined value for the terminal.

4. The control system of claim 2 or claim 3, wherein the outputting means of each terminal comprises a flip flop circuit (13).

5. The control system of any one of the preceding claims, wherein the operation of turning ON/OFF the power of each said terminal is remotely controlled by a control data output from said master unit.

6. A point-of-sales system according to any preceding claim.

7. A point-of-sales system according to claim 6, wherein said terminals comprise electronic cash registers.

8. A method of individually controlling the operational state of a plurality of terminals (1) in data communication with a master unit (2), the method characterized by:

   outputting a control signal from the master unit, said control signal being composed of a data time portion of preset duration which portion comprises a group of adjacent pulses (16), and a pause time portion having no such pulses;

   measuring, at each terminal, the duration of the data time portion of said control signal output from the master unit; and

   outputting, at each terminal, in response to the measured duration of said data time portion, a signal (E) to change the current operational state of the terminal when said measured duration becomes equal to or larger than a predetermined value set for the particular terminal;

the duration of the data time portion of said control signal output by the master unit being set according to the terminal whose operational state is to be changed.

**Patentansprüche**

1. System zum individuellen Steuern des Betriebszustands mehrerer Endgeräte (1) bei der Datenkommunikation mit einer Haupteinheit (2), **gekennzeichnet durch**:
   - eine Einrichtung zum Ausgeben eines Steuersignals von der Haupteinheit, das aus einem Datenzeitabschnitt vorgegebener Dauer, der eine Gruppe aneinander anschließender Impulse (16) und einen Pausenzeitabschnitt ohne solche Impulse aufweist, besteht;
   - eine Einrichtung (17, 18), die in jedem Endgerät vorhanden ist, um die Dauer des Datenzeitabschnitts des von der Haupteinheit ausgegebenen Steuersignals zu messen; und
   - eine Einrichtung (13), die in jedem Endgerät vorhanden ist und auf die gemessene Dauer des Datenzeitabschnitts anspricht, um ein Signal (E) zum Ändern des aktuellen Betriebszustands des Endgeräts auszugeben, wenn die gemessene Dauer mit einem vorgegebenen Wert übereinstimmt oder länger ist, wie er für das spezielle Endgerät eingestellt ist;
   - wobei die Haupteinheit die Dauer des Datenzeitabschnitts des Steuersignals abhängig vom Endgerät einstellt, dessen Betriebszustand zu ändern ist.

2. Steuerungssystem nach Anspruch 1, bei dem die Meßeinrichtung zwei in Reihe geschaltete Integrationsschaltungen (17, 18) aufweist.

3. Steuerungssystem nach Anspruch 2, bei dem die Zeitkonstante der Integrationsschaltungen (17, 18) den vorgegebenen Wert für das Endgerät festlegt.

4. Steuerungssystem nach Anspruch 2 oder Anspruch 3, bei dem die Ausgabeeinrichtung jedes Endgeräts eine Flip-Flop-Schaltung (13) aufweist.

5. Steuerungssystem nach einem der vorstehenden Ansprüche, bei dem der Vorgang des Ein/Aus-Schaltens der Spannung jedes Endgeräts durch einen von der Haupteinheit ausgegebenen Steuerdatenwert ferngesteuert wird.

6. Kassenplatzsystem nach einem der vorstehenden Ansprüche.

7. Kassenplatzsystem nach Anspruch 6, bei dem die Endgeräte elektronische Registrierkassen sind.

8. Verfahren zum individuellen Steuern des Betriebszustands mehrerer Endgeräte (1) bei der Datenkommunikation mit einer Haupteinheit (2), **gekennzeichnet durch**:
   - Ausgeben eines Steuersignals von der Haupteinheit, das aus einem Datenzeitabschnitt vorgegebener Dauer, der eine Gruppe aneinander anschließender Impulse (16) und einen Pausenzeitabschnitt ohne solche Impulse aufweist, besteht;
   - Messen, in jedem Endgerät, der Dauer des Datenzeitabschnitts des von der Haupteinheit ausgegebenen Steuersignals; und
   - Ausgeben, in jedem Endgerät, eines Signals (E), auf die gemessene Dauer des Datenzeitabschnitts hin, zum Ändern des aktuellen Betriebszustands, wenn die gemessene Dauer mit einem vorgegebenen Wert übereinstimmt oder länger ist, wie er für das spezielle Endgerät eingestellt ist;
   - wobei die Dauer des Datenzeitabschnitts des von der Haupteinheit ausgegebenen Steuersignals abhängig vom Endgerät eingestellt wird, dessen Betriebszustand zu ändern ist.

**Revendications**

1. Système pour commander individuellement les états opérationnels de plusieurs terminaux (1) en communication avec une unité pilote (2) pour la transmission d'informations, le système étant caractérisé par :
   des moyens pour fournir un signal de commande depuis ladite unité pilote, ledit signal de commande étant composé d'une plage temporelle d'informations, de durée pré-établie, cette plage comprenant un groupe d'impulsions contiguës (16), et d'une plage temporelle de pause ne comportant pas de telles impulsions ;
   des moyens (17,18), présents dans chacun desdits terminaux, pour mesurer la durée de la plage temporelle d'informations dudit signal de commande fourni par l'unité pilote ; et
   des moyens (13), présents dans chacun desdits terminaux, pour, en réponse à la durée mesurée de ladite plage temporelle d'informations, fournir un signal (E) destiné à modifier l'état opérationnel présent du terminal, quand ladite durée mesurée devient égale ou supérieure à une valeur prédéterminée établie pour le terminal particulier considéré ;

ladite unité pilote établissant la durée de la plage temporelle d'informations dudit signal de commande en fonction du terminal dont l'état opérationnel doit être modifié.

2. Système de commande selon la revendication 1, dans lequel les moyens de mesure comprennent deux circuits intégrateurs (17,18) reliés l'un à l'autre en série.

3. Système de commande selon la revendication 2, dans lequel les constantes de temps desdits circuits intégrateurs (17,18) déterminent ladite valeur prédéterminée pour le terminal.

4. Système de commande selon la revendication 2 ou la revendication 3, dans lequel les moyens de fourniture de chaque terminal comprennent un circuit formant bascule bistable (13).

5. Système de commande selon l'une quelconque des revendications précédentes, dans lequel l'opération de mise sous tension ou hors tension de chacun desdits terminaux est commandée à distance par des informations de commande délivrées par ladite unité pilote.

6. Système de points de vente selon l'une quelconque des revendications précédentes.

7. Système de points de vente selon la revendication 6, dans lequel lesdits terminaux comprennent des caisses enregistreuses électroniques.

8. Procédé pour commander individuellement les états opérationnels de plusieurs terminaux (1) en communication avec une unité pilote (2) pour la transmission d'informations, le procédé étant caractérisé par :

la fourniture d'un signal de commande depuis l'unité pilote, ledit signal de commande étant composé d'une plage temporelle d'informations, de durée pré-établie, cette plage comprenant un groupe d'impulsions contiguës (16), et d'une plage temporelle de pause ne comportant pas de telles impulsions ;

la mesure, à chaque terminal, de la durée de la plage temporelle d'informations dudit signal de commande délivré par l'unité pilote ; et

la fourniture, à chaque terminal, en réponse à la durée mesurée de ladite plage temporelle d'informations, d'un signal (E) destiné à modifier l'état opérationnel présent du terminal, quand ladite durée mesurée devient égale ou supérieure à une valeur prédéterminée, établie pour le terminal particulier considéré ;

la durée de la plage temporelle d'informations dudit signal de commande délivré par l'unité pilote étant établie en fonction du terminal dont l'état opérationnel doit être modifié.

Fig. 1

EP 0 289 253 B1

Fig. 2

Fig. 3

8

Fig. 4